(19)

Europäisches Patentamt
European Patent Office
Office européen des brevets

(11) **EP 3 689 460 A1**

(12) **EUROPEAN PATENT APPLICATION**
published in accordance with Art. 153(4) EPC

(43) Date of publication:
**05.08.2020 Bulletin 2020/32**

(21) Application number: **18861879.7**

(22) Date of filing: **27.09.2018**

(51) Int Cl.:
**B01J 35/04** (2006.01)    **B01J 23/63** (2006.01)
**F01N 3/10** (2006.01)    **F01N 3/28** (2006.01)

(86) International application number:
**PCT/JP2018/035848**

(87) International publication number:
**WO 2019/065804 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2017 JP 2017186475**

(71) Applicants:
• **Ibiden Co., Ltd.**
  **Ogaki-shi**
  **Gifu 503-8604 (JP)**
• **TOYOTA JIDOSHA KABUSHIKI KAISHA**
  **Toyota-shi, Aichi, 471-8571 (JP)**

(72) Inventors:
• **GOTO, Shinnosuke**
  **Ibi-gun**
  **Gifu 501-0695 (JP)**
• **TOJO, Takumi**
  **Toyota-shi**
  **Aichi 471-8571 (JP)**
• **YOSHIDA, Takeru**
  **Toyota-shi**
  **Aichi 471-8571 (JP)**
• **SUZUKI, Hiromasa**
  **Toyota-shi**
  **Aichi 471-8571 (JP)**

(74) Representative: **Hoefer & Partner Patentanwälte mbB**
**Pilgersheimer Straße 20**
**81543 München (DE)**

(54) **HONEYCOMB CATALYST**

(57)    The present invention relates to a honeycomb catalytic converter including: a honeycomb structured body in which multiple through-holes are arranged longitudinally in parallel with one another with a partition wall therebetween; and a noble metal supported on the honeycomb structured body, wherein each partition wall includes a substrate portion in the form of an extrudate containing a ceria-zirconia complex oxide and alumina, and a coat layer formed on a surface of the substrate portion and containing the noble metal, and the partition walls have a thermal expansion coefficient of $7.0 \times 10^{-6}/°C$ to $8.0 \times 10^{-6}/°C$ in a longitudinal direction.

FIG.2

**EP 3 689 460 A1**

**Description**

TECHNICAL FIELD

The present invention relates to a honeycomb catalytic converter.

BACKGROUND ART

Exhaust gas discharged from internal combustion engines of automobiles and the like contains harmful gases such as carbon monoxide (CO), nitrogen oxides (NOx), and hydrocarbons (HC). An exhaust gas catalytic converter that decomposes such harmful gases is also referred to as a three-way catalytic converter. A common three-way catalytic converter includes a catalyst layer that is formed by wash-coating the slurry containing noble metal particles having catalytic activity on a honeycomb monolithic substrate made of cordierite or the like

Patent Literature 1 discloses an exhaust gas catalytic converter (hereinafter also referred to as a "honeycomb catalytic converter) including a Pd-carrying honeycomb porous substrate and a Rh-carrying coat layer made of a ceria-zirconia solid solution on the porous substrate.

CITATION LIST

- Patent Literature

Patent Literature 1: JP 2017-39069 A

SUMMARY OF INVENTION

- Technical Problem

Yet, there is a demand for a honeycomb catalytic converter that exhibits higher exhaust gas conversion performance than the honeycomb catalytic converter disclosed in Patent Literature 1.

The present inventors conducted extensive studies on the honeycomb catalytic converter disclosed in Patent Literature 1. As a result, the present inventors found that in the honeycomb catalytic converter disclosed in Patent Literature 1, the coat layer is susceptible to separation or cracking during use. The reason is presumably a large difference in the thermal expansion coefficient between the substrate defining the honeycomb catalytic converter and the coat layer.

In Patent Literature 1, a coat layer containing a ceria-zirconia solid solution in an amount of about 98 wt% is formed on the porous substrate containing a ceria-zirconia solid in an amount of about 70 wt%. The solid solution of ceria and zirconia (CZ solid solution) has a high thermal expansion coefficient. Thus, presumably, the difference in the thermal expansion coefficient between the coat layer containing a CZ solid solution in an amount of about 98 wt% and the porous substrate containing a CZ solid solution in an amount of about 70 wt% is large, and the coat layer is susceptible to separation and cracking. Separation of the coat layer results in a decrease in the amount of catalyst, which results in poor exhaust gas conversion performance. When cracking occurs in the coat layer, exhaust gas in the coat layer tends to diffuse unevenly, which results in poor exhaust gas conversion performance.

The present invention was made to solve the above problem. An object of the present invention is to provide a honeycomb catalytic converter in which the exhaust gas conversion performance is not likely to decrease.

- Solution to Problem

Specifically, the present invention provides a honeycomb catalytic converter including: a honeycomb structured body in which multiple through-holes are arranged longitudinally in parallel with one another with a partition wall therebetween; and a noble metal supported on the honeycomb structured body, wherein each partition wall includes a substrate portion in the form of an extrudate containing a ceria-zirconia complex oxide and alumina, and a coat layer formed on a surface of the substrate portion and containing the noble metal, and the partition walls have a thermal expansion coefficient of $7.0 \times 10^{-6}/°C$ to $8.0 \times 10^{-6}/°C$ in a longitudinal direction.

In the honeycomb catalytic converter of the present invention, the partition walls have a thermal expansion coefficient of $7.0 \times 10^{-6}/°C$ to $8.0 \times 10^{-6}/°C$ in the longitudinal direction. The thermal expansion coefficient is low for the partition walls of the honeycomb catalytic converter containing a ceria-zirconia complex oxide. When the coat layers have a high thermal expansion coefficient, the thermal expansion coefficient of the partition walls including the coat layers in the longitudinal direction is expected to exceed $8.0 \times 10^{-6}/°C$. Thus, when the thermal expansion coefficient of the partition walls in the longitudinal direction is in the above range, it indicates that the difference in the thermal expansion coefficient between the substrate portions and the coat layers is small. Thus, in the honeycomb catalytic converter of the present invention, the coat layers are not susceptible to separation from the surfaces of the substrate portions or cracking during use, and a decrease in the exhaust gas conversion performance is less likely to occur.

When the thermal expansion coefficient of the partition walls in the longitudinal direction is higher than $8.0 \times 10^{-6}/°C$, the coat layers are easily separable. When the thermal expansion coefficient of the partition walls in the longitudinal direction is lower than $7.0 \times 10^{-6}/°C$, the coat layers are susceptible to cracking.

The thermal expansion coefficient of the partition walls in the longitudinal direction is measured according to JIS R 1618 (2002) by using a sample obtained by cutting the partition walls of the honeycomb catalytic converter to a sample having dimensions of $5 \times 5 \times 20$ mm.

In the honeycomb catalytic converter of the present invention, preferably, the noble metal is supported on the each substrate portion.

When the noble metal is supported not only on the coat layers but also on the substrate portions, the entire partition walls can be used to convert exhaust gas, achieving higher exhaust gas conversion performance.

In the honeycomb catalytic converter of the present invention, preferably, the substrate portion further contains an inorganic binder.

When the substrate portion further contains an inorganic binder, the mechanical strength of the partition walls can be increased.

In the honeycomb catalytic converter of the present invention, preferably, each partition wall has a thickness of 0.05 to 0.25 mm.

When each partition wall has a thickness in the above range, the mechanical strength and the exhaust gas conversion performance of the honeycomb catalytic converter can be easily achieved in a balanced manner.

Preferably, the honeycomb catalytic converter of the present invention has a length to diameter ratio (length/diameter) of 0.5 to 1.1.

The honeycomb catalytic converter having a shape with a length to diameter ratio in the above range can easily achieve the required exhaust gas conversion performance while the pressure loss in the honeycomb catalytic converter is kept low.

In the honeycomb catalytic converter of the present invention, preferably, the honeycomb catalytic converter has a diameter of 130 mm or less.

The honeycomb catalytic converter having a diameter of 130 mm or less can be made less susceptible to breakage from thermal shock.

Preferably, the honeycomb catalytic converter of the present invention contains 25 to 75 wt% ceria-zirconia complex oxide.

When the proportion of ceria-zirconia complex oxide is in the above range, the honeycomb catalytic converter can have a higher oxygen storage capacity (OSC).

BRIEF DESCRIPTION OF DRAWINGS

FIG. 1 is a schematic perspective view of an example of a honeycomb catalytic converter of the present invention.
FIG. 2 is a schematic cross-sectional view of an example of partition walls constituting the honeycomb catalytic converter of the present invention.

DESCRIPTION OF EMBODIMENTS

[Honeycomb catalytic converter]

First, the honeycomb catalytic converter of the present invention is described.

The honeycomb catalytic converter of the present invention includes a honeycomb structured body in which multiple through-holes are arranged longitudinally in parallel with one another with a partition wall therebetween, and a noble metal supported on the honeycomb structured body.

In the honeycomb catalytic converter of the present invention, the honeycomb structured body is an extrudate containing a ceria-zirconia complex oxide (hereinafter also referred to as "CZ ") and alumina.

Whether or not the honeycomb catalytic converter of the present invention contains the above components can be confirmed by X-ray diffraction (XRD).

In the honeycomb catalytic converter of the present invention, the partition walls constituting the honeycomb structured body each include a substrate portion in the form of an extrudate containing a ceria-zirconia complex oxide (hereinafter also referred to as "CZ particles") and alumina particles, and a coat layer formed on a surface of the substrate portion and containing a noble metal.

In the honeycomb catalytic converter of the present invention, the partition walls have a thermal expansion coefficient of $7.0 \times 10^{-6}/°C$ to $8.0 \times 10^{-6}/°C$ in a longitudinal direction.

In the honeycomb catalytic converter of the present invention, the thermal expansion coefficient is low for the partition walls of the honeycomb catalytic converter containing a ceria-zirconia complex oxide. This also indicates that that the difference in the thermal expansion coefficient between the substrate portions and the coat layers is small. Thus, in the honeycomb catalytic converter of the present invention, the coat layers are not susceptible to separation from the surfaces of the substrate portions or cracking during use, and a decrease in the exhaust gas conversion performance is less likely to occur.

When the thermal expansion coefficient of the partition walls in the longitudinal direction is higher than $8.0 \times 10^{-6}/°C$, the coat layer is easily separable. When the thermal expansion coefficient of the partition walls in the longitudinal direction is lower than $7.0 \times 10^{-6}/°C$, the coat layer is susceptible to cracking.

The thermal expansion coefficient of the partition walls in the longitudinal direction is measured according to JIS R 1618 (2002) by using a sample obtained by cutting the partition walls of the honeycomb catalytic converter to a sample having dimensions of $5 \times 5 \times 20$ mm.

FIG. 1 is a schematic perspective view of an example of the honeycomb catalytic converter of the present invention.

A honeycomb catalytic converter 10 shown in FIG. 1 includes a single honeycomb structured body 11 in which multiple through-holes 12 are arranged longitudinally in parallel with one another with a partition wall 13 therebetween.

The honeycomb structured body 11 contains CZ particles and alumina particles, and carries a noble metal.

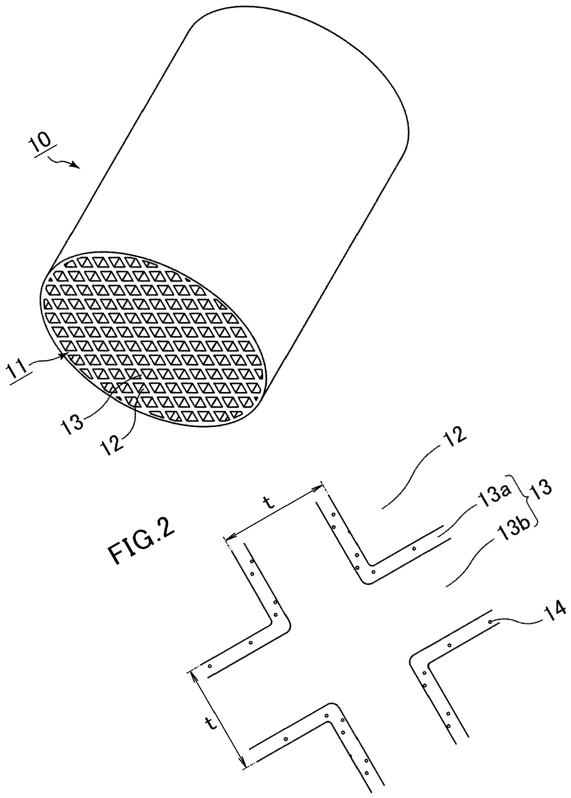

FIG. 2 is a schematic cross-sectional view of an example of the partition walls constituting the honeycomb catalytic converter of the present invention.

As shown in FIG. 2, each partition wall 13 includes a substrate portion 13b and a coat layer 13a containing a noble metal 14. Each substrate portion 13b is in the form of an extrudate containing a ceria-zirconia complex oxide and alumina. The noble metal 14 may also be supported on the substrate portions 13b.

In the honeycomb catalytic converter of the present invention, preferably, the noble metal is also supported on the substrate portions.

When the noble metal is supported not only on the coat layers but also on the substrate portions, the entire partition walls can be used to convert exhaust gas, achieving higher exhaust gas conversion performance.

In order to increase thermal shock resistance, preferably, CZ particles contained in the honeycomb catalytic converter of the present invention have an average particle size of 1 to 50 $\mu$m. The average particle size of the CZ particles is more preferably 1 to 30 $\mu$m.

When the CZ particles have an average particle size of 1 to 50 $\mu$m, the resulting honeycomb catalytic converter has a larger surface area, thus achieving a higher OSC.

The alumina particles contained in the honeycomb catalytic converter of the present invention may have any average particle size. Yet, in order to increase exhaust gas conversion performance, the average particle size is preferably 1 to 10 pm, more preferably 1 to 5 $\mu$m.

The average particle sizes of the CZ particles and alumina particles contained in the honeycomb catalytic converter of the present invention can be determined by taking a scanning electron microscope (SEM) image of the honeycomb catalytic converter with a SEM (S-4800 available from Hitachi High-Technologies Corporation).

Preferably, the honeycomb catalytic converter of the present invention contains 15 to 35 wt% alumina particles.

In the honeycomb catalytic converter of the present invention, ceria in the ceria-zirconia complex oxide of the CZ particles has an OSC. The ceria-zirconia complex oxide preferably forms a solid solution of ceria and zirconia.

In the honeycomb catalytic converter of the present invention, the amount of ceria in the ceria-zirconia complex oxide is preferably 30 wt% or more, more preferably 40 wt% or more, and preferably 90 wt% or less, more preferably 80 wt% or less. The amount of zirconia in the ceria-zirconia complex oxide is preferably 60 wt% or less, more preferably 50 wt% or less. Such a ceria-zirconia complex oxide has a high ceria content and thus has a high OSC.

In the honeycomb catalytic converter of the present invention, the alumina particles may be of any type, but $\theta$-phase alumina particles (hereinafter also referred to as "$\theta$-alumina particles") are preferred.

Use of $\theta$-phase alumina particles as dividers for the ceria-zirconia complex oxide can inhibit sintering of alumina particles to one another by heat during use, allowing for sustained catalytic function. Further, use of $\theta$-phase alumina particles can increase heat resistance.

The honeycomb catalytic converter of the present invention preferably contains inorganic particles used as an inorganic binder during the production, and more preferably contains $\gamma$-alumina particles derived from boehmite.

The honeycomb catalytic converter of the present invention preferably contains inorganic fibers, more preferably alumina fibers.

The honeycomb catalytic converter containing inorganic fibers such as alumina fibers can have better mechanical characteristics.

The inorganic fibers are those having an aspect ratio of 5 or more, and the inorganic particles are those having an aspect ratio of less than 5.

The honeycomb catalytic converter of the present invention preferably has a length to diameter ratio (length/diameter) of 0.5 to 1.1, more preferably 0.6 to 0.8.

In the honeycomb catalytic converter of the present invention, the diameter of the honeycomb catalytic converter is preferably 130 mm or less, more preferably 125 mm or less. The diameter of the honeycomb catalytic converter is also preferably 85 mm or more. The honeycomb catalytic converter having a diameter of 130 mm or less can be made less susceptible to breakage from thermal shock.

In the honeycomb catalytic converter of the present invention, the length of the honeycomb catalytic converter is preferably 65 to 120 mm, more preferably 70 to 110 mm.

The shape of the honeycomb catalytic converter of the present invention is not limited to a round pillar shape. Examples include a prism, a cylindroid shape, a pillar shape having an end face with a racetrack shape, and a prism with rounded corners (e.g., a triangular pillar shape with rounded corners).

In the honeycomb catalytic converter of the present invention, preferably, all the partition walls have the same thickness. Specifically, the thickness of each partition wall of the honeycomb catalytic converter is preferably 0.05 to 0.25 mm, more preferably 0.05 to 0.15 mm.

In the honeycomb catalytic converter of the present invention, the thickness of each coat layer is preferably 0.01 to 0.10 mm, more preferably 0.02 to 0.05 mm.

In the honeycomb catalytic converter of the present invention, the thickness of each substrate portion is preferably 0.05 to 0.20 mm, more preferably 0.05 to 0.15 mm.

In the honeycomb catalytic converter of the present invention, the shape of the through-holes is not limited to a quadrangular pillar shape. For example, it may be a triangular pillar shape or a hexagonal pillar shape.

In the honeycomb catalytic converter of the present invention, preferably, the density of the through-holes in a cross section perpendicular to the longitudinal direction of the honeycomb catalytic converter is 31 to 155 pcs/cm$^2$.

Preferably, the honeycomb catalytic converter of the present invention has a porosity of 40 to 70%. When the porosity of the honeycomb catalytic converter is in the above range, the honeycomb catalytic converter can exhibit high exhaust gas conversion performance while its strength is maintained.

The porosity of the honeycomb catalytic converter can be measured by a weighing method described below.

(1) The honeycomb catalytic converter is cut in size of 10 cells × 10 cells × 10 mm to obtain a measurement sample. The measurement sample is ultrasonically washed with deionized water and acetone, and dried in an oven at 100°C. The measurement sample with a size of 10 cells × 10 cells × 10 mm is a sample that is cut out such that the sample includes outermost through-holes and partition walls defining these through-holes and has a longitudinal length of 10 mm, with 10 through-holes aligned longitudinally × 10 through-holes aligned transversely.

(2) Using a measuring microscope (Measuring Microscope MM-40 available from Nikon, magnification: 100 times), the cross-sectional dimension of the measurement sample is measured, and the volume is determined from a geometric calculation (when the volume cannot be determined from a geometric calculation, the volume is measured by measuring the water-saturated weight and the weight in water).

(3) The weight of the measurement sample based on assumption that the measurement sample is a completely dense body is calculated from the calculated volume and the true density of the measurement sample measured with a pycnometer. A measurement procedure using a pycnometer is as described in (4) below.

(4) The honeycomb fired body is pulverized to prepare 23.6 cc of powder. The powder is dried at 200°C for 8 hours. Subsequently, the true density is measured according to JIS R 1620:1995, using Auto Pycnometer 1320 available from Micromeritics. The evacuation time is 40 minutes.

(5) The actual weight of the measurement sample is measured using an electric balance (HR202i available from A & D).

(6) The porosity of the honeycomb catalytic converter is determined by the following formula.

```
(Porosity of honeycomb catalytic converter) = 100 - (actual
weight of measurement sample/weight of measurement sample
based on assumption that the measurement sample is a
completely dense body) × 100 [%]
```

The honeycomb catalytic converter of the present invention may include a peripheral coat layer on the outer periphery of the honeycomb fired body.

The thickness of the peripheral coat layer is preferably 0.1 to 2.0 mm.

In the honeycomb catalytic converter of the present invention, a noble metal is supported on the honeycomb structured body.

Examples of the noble metal include platinum group metals such as platinum, Pd, and Rh.

The noble metal may be directly supported on the honeycomb fired body. Alternatively, the noble metal may be supported through the formation of a coat layer containing the noble metal on the surface of each partition wall constituting the honeycomb fired body.

In the honeycomb catalytic converter of the present invention, the total amount of the noble metals supported is preferably 0.1 to 15 g/L, more preferably 0.5 to 10 g/L.

The term "amount of the noble metal supported" as used herein refers to the weight of the noble metal per apparent volume of the honeycomb catalytic converter. The apparent volume of the honeycomb catalytic converter includes the volume of pores and cells, and it includes the volume of the peripheral coat layer and/or the volume of an adhesive layer.

[Method of producing honeycomb catalytic converter]

Next, a method of producing the honeycomb catalytic converter of the present invention is described.

The method of producing the honeycomb catalytic converter of the present invention may be, for example, a method that includes a coat layer forming step of forming a coat layer containing a noble metal, CZ raw materials, and alumina particles on a surface of each partition wall of a honeycomb fired body produced by the following method.

(Production of honeycomb fired body)

First, a method of producing a honeycomb fired body is described.

The method of producing a honeycomb fired body may be, for example, a method that includes a molding step of molding a raw material paste containing CZ particles and alumina particles into a honeycomb molded body in which multiple through-holes are arranged longitudinally in parallel with one another with a partition wall therebetween, and a firing step of firing the honeycomb molded body to produce a honeycomb fired body.

(Molding step)

In the molding step, first, a raw material paste containing CZ particles and alumina particles is prepared.

The types, average particle sizes, and the like of the CZ particles and the alumina particles have been described in the above section [Honeycomb catalytic converter], so that a detailed description is omitted.

The average particle sizes of the CZ particles and the alumina particles used as raw materials of the honeycomb catalytic converter can be determined by a laser diffraction particle size distribution meter (Mastersizer 2000 available from Malvern Panalytical).

Examples of other raw materials used to prepare the raw material paste include inorganic fibers, inorganic binders, organic binders, forming auxiliaries, and dispersion media.

The inorganic fibers may be made of any material. Examples include alumina, silica, silicon carbide, silica alumina, glass, potassium titanate, and aluminum borate. Two or more of these may be used in combination. Of these, alumina fibers are preferred.

The inorganic fibers preferably have an aspect ratio of 5 to 300, more preferably 10 to 200, still more preferably 10 to 100.

Any inorganic binder may be used. Examples include solids contained in materials such as alumina sol, silica sol, titania sol, sodium silicate, sepiolite, attapulgite, and boehmite. Two or more of these inorganic binders may be used in combination.

Of these inorganic binders, boehmite is preferred. Boehmite is alumina monohydrate with a composition of AlOOH, and has good dispersibility in media such as water. Thus, boehmite is preferably used as an inorganic binder.

Any organic binder may be used. Examples include methyl cellulose, carboxymethyl cellulose, hydroxyethyl cellulose, polyethylene glycol, phenolic resin, and epoxy resin. Two or more of these may be used in combination.

Any pore-forming agent may be used. Examples include acrylic resins, coke, and starch. In the present invention, use of two or more selected from acrylic resins, coke, and starch is preferred.

The pore-forming agent is one that is used to introduce pores into a honeycomb fired body when producing a honeycomb fired body.

Any forming auxiliary may be used. Examples include ethylene glycol, dextrins, fatty acids, fatty acid soaps, and polyalcohols. Two or more of these may be used in combination.

Any dispersion medium may be used. Examples include water, organic solvents such as benzene, and alcohols such as methanol. Two or more of these may be used in combination.

When the CZ particles, alumina particles, alumina fibers, and boehmite are used as the materials of the raw material paste, the proportions of these materials relative to the total solids remaining in the raw material paste after the firing step are preferably as follows: CZ particles: 25 to 75 wt%; alumina particles: 15 to 35 wt%; alumina fibers: 5 to 15 wt%, and boehmite: 5 to 20 wt%.

Preparation of the raw material paste preferably involves mixing/kneading of the raw materials. A device such as a mixer or an attritor may be used for mixing, or a device such as a kneader may be used for kneading.

After a raw material paste is prepared by the above method, the raw material paste is molded into a honeycomb molded body in which multiple through-holes are arranged longitudinally in parallel with one another with a partition wall therebetween.

Specifically, the raw material paste is extrusion-molded into a honeycomb molded body. More specifically, the raw material paste is passed through a die of a specific shape to form a continuous honeycomb molded body having through-holes of a specific shape, and the continuous honeycomb molded body is cut to a specific length, whereby a honeycomb molded body is obtained.

Next, preferably, a dryer such a microwave dryer, a hot-air dryer, a dielectric dryer, a reduced-pressure dryer, a vacuum dryer, or a freeze-dryer is used to dry the honeycomb molded body to produce a honeycomb dried body.

Herein, the honeycomb molded body and the honeycomb dried body before the firing step are also collectively referred to as a "honeycomb molded body".

(Firing step)

In the firing step, the honeycomb molded body is fired to produce a honeycomb fired body. In this step, the honeycomb molded body is degreased and fired. Thus, the step can also be referred to as a "degreasing/firing step", but is referred to as a "firing step" for the purpose of convenience.

The temperature in the firing step is preferably 800°C to 1300°C, more preferably 900°C to 1200°C. The duration of the firing step is preferably 1 to 24 hours, more preferably 3 to 18 hours. The atmosphere of the firing step is not limited, but an atmosphere with an oxygen concentration of 1 to 20% is preferred.

The honeycomb fired body can be produced by the above steps.

Subsequently, a description is given on the coat layer forming step of forming a coat layer including a noble metal and CZ on a surface of each partition wall of the honeycomb fired body.

(Coat layer forming step)

First, a slurry for forming a coat layer, which is used as a raw material of the coat layer, is prepared.

The slurry for forming a coat layer is obtained by mixing CZ particles, alumina particles, and a noble metal with a solvent.

Examples of the noble metal include platinum group metals such as platinum, Pd, and Rh.

The noble metal used to prepare the slurry for forming a coat layer may be a dispersion of noble metal particles or a solution of a noble metal salt or a noble metal complex.

In the preparation of the slurry for forming a coat layer, the order of mixing various raw materials is not limited. In one method, CZ particles, alumina particles, a noble metal, and a solvent are mixed together at once. In another method, CZ particles and a noble metal are first mixed together to obtain noble metal-carrying CZ particles, and subsequently, the noble metal-carrying CZ particles, alumina particles, and a solvent are mixed together. In yet another method, alumina particles and a noble metal are first mixed together to obtain a noble metal-carrying alumina particles, and subsequently, the noble metal-carrying alumina particles, CZ particles, and a solvent are mixed together.

Examples of other raw materials used to prepare the slurry for forming a coat layer include inorganic binders and dispersion media.

Such other raw materials are preferably those used in the raw material paste to produce a honeycomb molded body.

The honeycomb fired body is immersed in the slurry for forming a coat layer, and removed from the slurry, followed by drying and firing, whereby a honeycomb catalytic converter of the present invention can be obtained in which a coat layer containing a noble metal is formed on the surface of each partition wall constituting the honeycomb fired body.

The total amount of the noble metals supported in the coat layer forming step is preferably adjusted to 0.1 to 15 g/L, more preferably 0.5 to 10 g/L.

In order to adjust the thermal expansion coefficient of the partition walls in the longitudinal direction to $7.0 \times 10^{-6}/°C$ to $8.0 \times 10^{-6}/°C$, the coat layer preferably has a lower thermal expansion coefficient than the honeycomb fired body (substrate portion).

A slurry for forming a coat layer having a lower thermal expansion coefficient than the honeycomb fired body preferably has a composition that contains at least 25 wt% alumina particles.

(Other steps)

When a peripheral coat layer is formed on the outer periphery of the honeycomb fired body, the peripheral coat layer can be formed by applying a peripheral coat layer paste to the outer periphery of the honeycomb fired body excluding both end faces thereof, and then solidifying the peripheral coat layer paste by drying.

When a honeycomb structured body in which multiple honeycomb fired bodies are combined together with an adhesive layer therebetween is used, the honeycomb structured body can be produced by applying an adhesive layer paste to the outer periphery of each honeycomb fired body excluding both end faces thereof, combining the honeycomb fired bodies, and solidifying the adhesive layer paste by drying. The adhesive layer paste may have the same composition as that of the raw material paste or the slurry for forming a coat layer.

EXAMPLES

Examples that more specifically disclose the present invention are described below. The present invention is not limited to these examples.

[Production of honeycomb catalytic converter]

(Production Example 1)

The following materials were mixed/kneaded to prepare a raw material paste: CZ particles (CeO$_2$:ZrO$_2$ = 3:7 (weight ratio), average particle size: 2 $\mu$m) (26.4 wt%), $\theta$-alumina particles (average particle size: 2 $\mu$m) (13.2 wt%), alumina fibers (average fiber diameter: 3 pm; average fiber length: 60 $\mu$m) (5.3 wt%), boehmite as an inorganic binder (11.3 wt%), methyl cellulose as an organic binder (5.3 wt%), acrylic resin as a pore-forming agent (2.1 wt%), coke also as a pore-forming agent (2.6 wt%), polyoxyethylene oleyl ether (surfactant) as a forming auxiliary (4.2 wt%), and deionized water (29.6 wt%).

Using an extruder, the raw material paste was extrusion-molded into a round pillar-shaped honeycomb molded body. Then, using a reduced-pressure microwave dryer, the honeycomb molded body was dried at an output of 1.74 kW under a reduced pressure of 6.7 kPa for 12 minutes, and then degreased/fired at 1100°C for 10 hours, whereby a honeycomb fired body was produced. The honeycomb fired body had a round pillar shape with a diameter of 103 mm and a length of 105 mm in which the density of the through-holes was 77.5 pcs/cm$^2$ (500 cpsi) and the thickness of each partition wall was 0.076 mm (3 mil).

(Supporting noble metal)

Palladium nitrate Pd(NO$_3$)$_2$ in a nitric acid solution (Pd concentration: 100 g/L) was prepared. The honeycomb fired body obtained in Production Example 1 was immersed and kept in the solution for 24 hours. Subsequently, the honeycomb fired body was removed from the mixed solution, dried at 110°C for 2 hours, and fired at 500°C for 1 hour in a nitrogen atmosphere, whereby a Pd-carrying honeycomb fired body in which Pd was supported on the honeycomb fired body was obtained.

The amount of Pd supported was 1.2 g/L per apparent volume of the honeycomb fired body.

(Thermal expansion coefficient measurement 1: thermal expansion coefficient of substrate portion)

The Pd-carrying honeycomb fired body was cut into a piece having cross-sectional dimensions of 5 × 5 mm and a longitudinal length of 20 mm. The thermal expansion coefficient of the substrate portion was measured according to JIS R 1618 (2002) and found to be $8.0 \times 10^{-6}$/°C.

(Example 1)

(Preparation of slurry for forming coat layer)

CZ particles (CeO2:ZrO2 = 3:7 (weight ratio), average particle diameter: 2 $\mu$m) were added and mixed with a rhodium nitrate solution, and the solvent was dried, followed by firing at 500°C for 1 hour, whereby Rh-carrying CZ particles in which Rh was supported on the CZ particles were obtained. Subsequently, the Rh-carrying CZ particles (20 parts by weight) were mixed with $\theta$-alumina particles (average particle size: 2 $\mu$m) (80 parts by weight), and these particles were mixed with ion-exchanged water (400 parts by weight), whereby a slurry for forming a coat layer was prepared.

(Formation of coat layer)

The Pd-carrying honeycomb fired body was immersed in the slurry for forming a coat layer. Then, the Pd-carrying honeycomb fired body was removed from the slurry for forming a coat layer, and excess slurry attached to the Pd-carrying honeycomb fired body was blown off by a blower. Subsequently, the honeycomb fired body was dried at 80°C for 24 hours, and fired at 500°C for 1 hour, whereby a honeycomb catalytic converter according to Example 1 was obtained.

The thickness of the coat layer on one side of each partition wall was 0.025 mm, and the thickness of the partition wall was 0.126 mm.

The amount of Rh supported was 0.4 g/L per apparent volume of the honeycomb catalytic converter.

(Example 2)

A honeycomb catalytic converter according to Example 2 was obtained as in Example 1, except that the mixing ratio of the Rh-carrying CZ particles to the θ-alumina particles in the slurry for forming a coat layer was changed to 50:50 (weight ratio).

(Comparative Example 1)

A honeycomb catalytic converter according to Comparative Example 1 was obtained as in Example 1, except that the mixing ratio of the Rh-carrying CZ particles to the θ-alumina particles in the slurry for forming a coat layer was changed to 60:40 (weight ratio).

(Thermal expansion coefficient measurement 2: thermal expansion coefficient of partition walls)

The honeycomb catalytic convers according to Examples 1 and 2 and Comparative Example 1 were cut to pieces each having cross-sectional dimensions of $5 \times 5$ mm and a longitudinal length of 20 mm. The thermal expansion coefficients of the partition walls in the longitudinal direction of these examples were measured according to JIS R 1618 (2002) and found to be $7.4 \times 10^{-6}/°C$, $8.0 \times 10^{-6}/°C$, and $8.2 \times 10^{-6}/°C$, respectively.

(Separation resistance test)

The coat layers were subjected to a separation resistance test under the following conditions to evaluate the separation resistance of the coat layers.

The honeycomb catalytic converters according to Examples 1 and 2 and Comparative Example 1 were each enclosed in a metal casing via an alumina mat between the converter and the metal casing. The metal casing was alternately ventilated with air heated by a gas burner and air at room temperature. The temperature of the center of the honeycomb catalytic converter was brought to 950°C by heating the air and then down to 200°C by room air. This cycle of ventilation of the heated air and the roomtemperature air was repeated 100 times for a heat cycle test. The coat layers of each honeycomb catalytic converter after the heat cycle test were visually observed. As a result, no separation was found in the coat layers of the honeycomb catalytic converters according to Examples 1 and 2, while separation occurred in the coat layers of the honeycomb catalytic converter according to Comparative Example 1.

The above results show that in the honeycomb catalytic converters according to Examples 1 and 2 in which the thermal expansion coefficients of the partition walls in the longitudinal direction are in the range of $7.0 \times 10^{-6}/°C$ to $8.0 \times 10^{-6}/°C$, the coat layers have high separation resistance and the exhaust gas conversion performance is not likely to decrease.

REFERENCE SIGNS LIST

10 honeycomb catalytic converter
11 honeycomb structured body
12 through-hole
13 partition wall
13a coat layer
13b substrate portion
14 noble metal

**Claims**

1. A honeycomb catalytic converter comprising:

   a honeycomb structured body in which multiple through-holes are arranged longitudinally in parallel with one another with a partition wall therebetween; and
   a noble metal supported on the honeycomb structured body,
   wherein each partition wall includes a substrate portion in the form of an extrudate containing a ceria-zirconia complex oxide and alumina, and a coat layer formed on a surface of the substrate portion and containing the noble metal, and
   the partition walls have a thermal expansion coefficient of $7.0 \times 10^{-6}/°C$ to $8.0 \times 10^{-6}/°C$ in a longitudinal direction.

2. The honeycomb catalytic converter according to claim 1,
   wherein the noble metal is supported on each substrate portion.

3. The honeycomb catalytic converter according to claim 1 or 2,
   wherein each substrate portion further contains an inorganic binder.

4. The honeycomb catalytic converter according to any one of claims 1 to 3,
   wherein each partition wall has a thickness of 0.05 to 0.25 mm.

5. The honeycomb catalytic converter according to any one of claims 1 to 4,
   wherein the honeycomb catalytic converter has a length to diameter ratio (length/diameter) of 0.5 to 1.1.

6. The honeycomb catalytic converter according to any one of claims 1 to 5,
   wherein the honeycomb catalytic converter has a diameter of 130 mm or less.

7. The honeycomb catalytic converter according to any one of claims 1 to 6,
   wherein the honeycomb catalytic converter contains 25 to 75 wt% ceria-zirconia complex oxide.

FIG.2

# INTERNATIONAL SEARCH REPORT

| International application No. |
| --- |
| PCT/JP2018/035848 |

A. CLASSIFICATION OF SUBJECT MATTER
Int.Cl. B01J35/04(2006.01)i, B01J23/63(2006.01)i, F01N3/10(2006.01)i,
F01N3/28(2006.01)i

According to International Patent Classification (IPC) or to both national classification and IPC

B. FIELDS SEARCHED

Minimum documentation searched (classification system followed by classification symbols)
Int.Cl. B01J35/04, B01J23/63, F01N3/10, F01N3/28

Documentation searched other than minimum documentation to the extent that such documents are included in the fields searched
Published examined utility model applications of Japan       1922–1996
Published unexamined utility model applications of Japan       1971–2018
Registered utility model specifications of Japan       1996–2018
Published registered utility model applications of Japan       1994–2018

Electronic data base consulted during the international search (name of data base and, where practicable, search terms used)
DWPI (Derwent Innovation)

C. DOCUMENTS CONSIDERED TO BE RELEVANT

| Category* | Citation of document, with indication, where appropriate, of the relevant passages | Relevant to claim No. |
| --- | --- | --- |
| A | JP 2017-39069 A (DENSO CORP.) 23 February 2017, claims, paragraph [0006], first embodiment, examples & US 2018/0229183 A1, claims, paragraph [0012], first embodiment, experiment examples & WO 2017/029971 A1 & CN 107921417 A | 1-7 |
| A | JP 2014-147858 A (CATALER CORPORATION) 21 August 2014, entire text (Family: none) | 1-7 |
| A | JP 2013-522020 A (SAINT-GOBAIN CENTRE DE RECHERCHES ET D'ETUDES EUROPEEN) 13 June 2013, entire text & US 2013/0011304 A1 & WO 2011/114050 A1 & EP 2547417 A1 & FR 2957529 A1 & CN 102811789 A | 1-7 |

☐ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 13 November 2018 (13.11.2018) | 27 November 2018 (27.11.2018) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**EP 3 689 460 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017039069 A